# EUROPEAN PATENT SPECIFICATION

(11) **EP 0 295 813 B1**
(45) Date of publication and mention of the grant of the patent: **05.01.1994**
(21) Application number: 88305070.0
(22) Date of filing: 03.06.1988
(51) Int. Cl.: G11B 5/72, G11B 5/71

(54) **Magnetic recording medium and a method for producing the same**
Magnetischer Aufzeichnungsträger und Methode zu seiner Herstellung
Milieu d'enregistrement et méthode pour sa fabrication

(30) Priority: 16.06.1987 JP 147989/87
(43) Date of publication of application: 21.12.1988
(73) Proprietor: HITACHI, LTD., Chiyoda-ku, Tokyo 100 (JP)
(72) Inventor: Shoji, Mitsuyoshi, Ibaraki 319-13 (JP); Ito, Yutaka, Takahagi-shi Ibaraki 318 (JP); Nakano, Fumio, Hitachi-shi Ibaraki 316 (JP); Narahara, Toshikazu, Ibaraki 319-11 (JP)
(74) Representative: Stuart, Ian Alexander

(56) References cited:
- EP-A- 0 140 582
- DE-A- 3 441 981
- FR-A- 2 554 625
- US-A- 4 419 404
- US-A- 4 446 193

## Description

The present invention relates to a magnetic recording medium of coating type or continuous thin-film type, particularly to a magnetic recording medium with a high durability comprising an outermost organic coating serving as the surface for sliding contact with a magnetic read-write head and also relates to a method for producing the same.

The magnetic recording medium such as magnetic disks is used in many fields of applications in large-capacity information storage and reproduction devices. Examples of the applications thereof include a floppy disk as a digital signal storage device and a hard disk as a peripheral storage device of a large-scale computer. All of these magnetic disks are expected to have an increased recording capacity and, at the same time, is required to have reliability sufficient to withstand the operation for a long period of time.

In magnetic disks, information is written and read out through sliding contact thereof with a magnetic head. Some devices are devised so that the writing and reading-out of information are conducted while maintaining a very narrow clearance between the magnetic disk and the magnetic head without causing any sliding contact therebetween. However, in such a case as well, it is known that there occurs the sliding contact between the magnetic head and the magnetic disk with certain probability.

An increase in the storage capacity necessarily brings about a more rigorous sliding contact conditions, because of a extremely narrow clearance and a high sliding contact probability. Therefore, an improvement in the sliding durability of the magnetic recording medium is an indispensable requirement. However, at the present time, there exists no magnetic disk having a sufficient sliding durability.

Current measures for improving the sliding durability are those which comprise reducing the friction and abrasion of the magnetic recording medium surface during the sliding contact with the aid of a lubricant.

One of them comprises impregnating the magnetic recording medium layer of a magnetic disk with a lubricant comprising derivatives of long-chain fatty acids such as oleic or stearic acid. This measure is generally used in a magnetic recording medium prepared by coating with a mixture of a magnetic powder with a binder. However, the lubricant dissipates little by little from the surface of the magnetic recording medium which makes it difficult to maintain the lubricity for a long period of time.

Another measure comprises applying a fluorine lubricant having a superior lubricity, i.e. a perfluoroalkyl polyether, on the surface of a magnetic recording medium as disclosed, for example, in U.S. Patent No. 3,778,308. Perfluoroalkyl polyether is commercially available in trade names Krytox 143, a product of E.I. du Pont de Nemours & Co.; and Fomblin Y, a product of Montefluos S.p.A.. Although such measure that involves the application of a lubricant on the surface of a magnetic recording medium exhibits a very excellent effect in an early stage of its use, it has a drawback that a prolonged use thereof brings about dropping of the lubricant which reduces the effect.

Still another measure comprises an application of a fluorine surfactant with a high adsorptivity to the surface of a magnetic recording medium for preventing the dropping of the lubricant in an early stage as disclosed, for example, in Japanese Patent Laid-Open No. 116931/1984. However the fluorine surfactant cannot be firmly fixed to the surface of the magnetic recording medium and, therefore, drops from the sliding surface during its operation, thus failing in attaining a sufficient improvement in the sliding durability of the magnetic recording medium.

Further measure comprises an application to the surface of the magnetic recording medium of a fluorine lubricant chemically reactive with the surface material of the magnetic recording medium to constitute a firm binding of the fluorine lubricant with the magnetic recording medium surface as disclosed, for example, in U.S. Patent Nos. 4,120,995, 4,526,833, 4,529,659, 4,536,444 and Japanese Patent Laid-Open No.155345/1986. However the chemical reaction according to this measure proceeds between solid and liquid phases so that control of the reaction and formation of a uniform thin film are rendered difficult, such that the application of this measure to actual manufacturing processes was also difficult.

It is thus desirable to be able to provide a magnetic recording medium having a high sliding durability.

It is also desirable to be able to provide a method for producing the magnetic recording medium having a high sliding durability without manufacturing difficulty.

A magnetic recording medium (e.g. of coating type or continuous thin-film type) of the present invention is characterized in that an outermost layer including an organic binder contains a fluorine compound having at its terminal the same molecular skeleton as that of at least one component of the organic binder. The outermost organic polymer layer of the present invention constitutes a sliding contact surface of the magnetic recording medium with the magnetic head. The fluorine compound may be composed of a long chain perfluorinated polyoxyalkyl group and a hydrocarbon chain having at least at its terminal the same molecular skeleton as that of at least one component of the organic binder . It may be firmly anchored to the surface of the outermost organic polymer layer not by chemical reaction but by the compatibility of the fluorine compound having at its one terminal the same molecular skeleton as that of at least one component of the organic binder with the organic binder in the outermost organic polymer layer of the magnetic recording medium.

Examples of the above-described fluorine compound include a compound represented by the following general formula:

R_{f}-X₁-X₂

wherein R_{f} represents a perfluorinated polyoxyalkyl group, X₁ a direct bond or an -O-, -CH₂O-, -COO- or -CONH- group and X₂ the same molecular skeleton as that of at least one component of the organic binder.

A specific example of the perfluorinated polyoxyalkyl group according to the present invention is perfluoro-polypropyleneoxide represented by the following general formula:

F(CF(CF₃)-CF₂-O-)ₙCF(CF₃)-

wherein n represents a value of from 7 to 14 on the average.

Examples of the organic binder include a compound containing in its molecular skeleton at least one group selected from groups represented by the following general formulas: 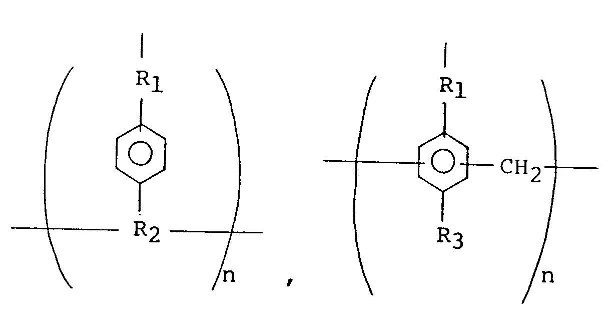
or copolymer group thereof,
wherein R₁ represents a direct bond or a 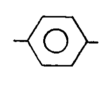
or -CH₂-CH(OH)CH₂ - group; R₂ is =CH-CH₂- or =CH-C₂H₄- group; R₃ is -CₘH₂ₘ₊₁ (wherein m represents an integer of 0 to 18) or -CH₂OH group; and n is an integer of 1 or more;
a group represented by the following general formula: 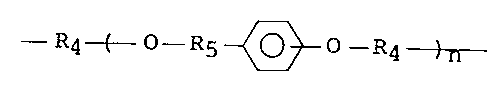
wherein R₄ represents a -CH₂-CH(OH)CH₂- group, R₅ a direct bond or a 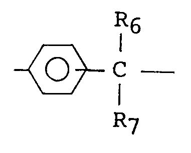
group (wherein R₆ and R₇ which may be the same or different, each represents -H, -CH₃, -C₂H₅, -C₃H₇, -CF₃, 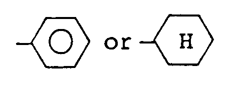
group) and n an integer of 1 or more,
a group represented by the following general formula: 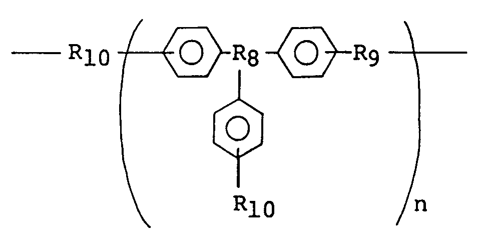
wherein R₈ represents a =CH-, =C₂H₃- or =C₃H₅- group, R₉ an -OCH₂-CH(OH)CH₂- group, R₁₀ an -OCH₂-CH(OH)CH₂- or 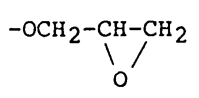
group and n an integer of 1 or more, and
a group of the following general formula: 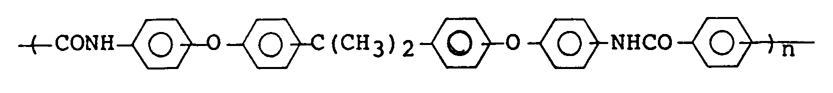
wherein n represents an integer of 1 or more.

Specific examples of the above-described fluorine compound include one containing as its fundamental skeleton a compound which comprises a vinylphenol copolymer represented by the above-described general formula and a long-chain perfluorinated polyoxyalkyl group bonded thereto and is represented by the following general formula: 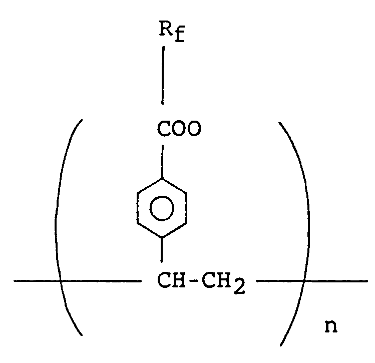
wherein R_{f} represents a perfluorinated polyoxyalkyl group and n an integer of 1 or more.

The mixing of the above-described fluorine compound with the organic binder followed by the formation of a coating causes the perfluorinated polyoxyalkyl group to orient on the surface of the coating and the fluorine-free vinylphenol group to orient within the coating, because the fluorine-free vinylphenol group contained in the fluorine compound has the same molecular structure as that of the organic binder and therefore is excellent in compatibility with the organic binder while the perfluorinated polyoxyalkyl group is very poor in compatibility with the organic binder. When the coating is cured in this state, the perfluorinated polyoxyalkyl group is exposed and oriented on the surface of the coating, while the fluorine-free vinylphenol group is firmly fixed to the surface of the magnetic recording medium, which enables an excellent lubricating effect to be exhibited for a long period of time, thus enhancing the sliding durability of the magnetic recording medium.

There is no particular limitation with respect to the organic binder used in the present invention, and the organic binder may be any of polyester, polyamide, polyimide, polyurethane, polyacrylic, polyetheramide, polyvinyl butyral, phenolic, and epoxy binders.

Some embodiments of the invention will now be described with reference to the accompanying drawings in which:
Fig. 1 is a cross sectional view of one embodiment shown in part of the magnetic recording medium according to the present invention;
Fig. 2 is a cross sectional view of another embodiment shown in part of the magnetic recording medium according to the present invention; and
Figs. 3a and 3b are graphs illustrating spectrum intensities indicating fluorine compound concentrations respectively at and beneath the surface of the protective layer shown in Fig. 2.

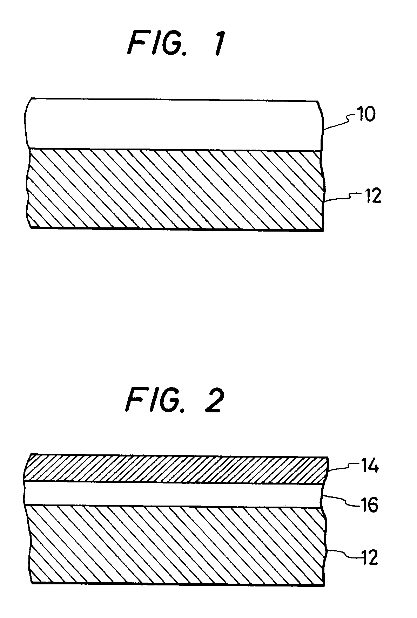

The embodiment of Fig. 1 shows a coating type magnetic recording medium wherein the outermost layer contains a magnetic powder, an organic binder and a fluorine compound and a perfluorinated polyoxyalkyl group of the fluorine compound is oriented on the surface of the outermost layer coating containing the magnetic powder.

The embodiment of Fig. 2 shows a continuous magnetic thin film type magnetic recording medium wherein the outermost protective layer covering the continuous magnetic thin film contains an organic binder and a fluorine compound and a perfluorinated polyoxyalkyl group of the fluorine compound is oriented on the surface of the outermost protective layer coating.

In Figs. 1 and 2, numeral 10 designates an outermost magnetic coating layer, a layer containing a fluorine compound, numeral 12 an aluminum substrate, numeral 14 an organic protective layer coating, a layer containing a fluorine compound, and numeral 16 a continuous thin-film magnetic layer.

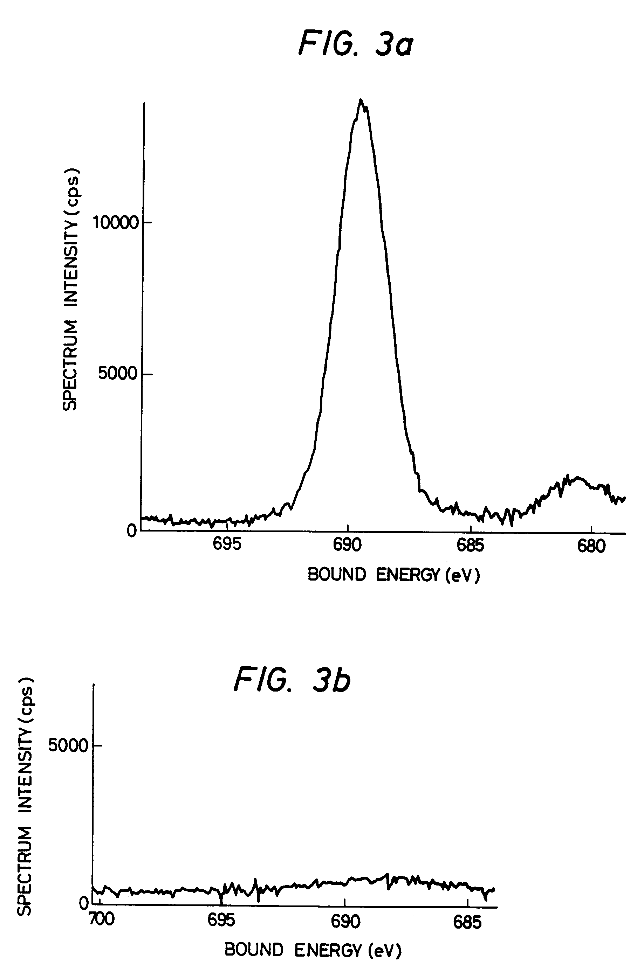

Figs. 3a and 3b are graphs respectively showing the results of measurement of the fluorine compound (Fₗₛ) concentration by X ray photoelectron spectroscopy in terms of the relationship between the binding energy (eV; abscissa) and the spectral band intensity (cps; ordinate) of the surface of the protective layer coating 14 and the inside of the coating (depth: 50 Å) containing the fluorine compound of the present invention. It can be seen from Figs. 3a and 3b that the fluorine compound is oriented only on the surface of the outermost protective layer.

### Examples

The effect of the present invention will now be described in more detail with reference to the following Examples which should not be construed as limiting the scope of the present invention.

### Example 1

A 200-ml three-necked flask equipped with a reflux condenser was charged with a mixed solution comprising 22 g (0.01 mol) of Krytox 157FS (a product of E.I. du Pont de Nemours & Co.) represented by the following formula: 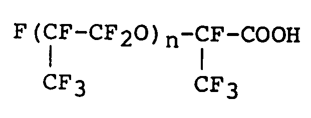
wherein n represents a value of 14 on the average, and 100 g of trifluorotrichloroethane. Then, 10 g of thionyl chloride (SOCl₂) was added thereto. The mixture was heated at 80°C for 4 hr, followed by continuation of the stirring. After the completion of the reaction, unreacted SOCl₂, a by-product, i.e., HCl, and the solvent, i.e., trifluorotrichloroethane, were removed by vacuum distillation to prepare a reactant (I) represented by the following formula:

F(CF(CF₃)-CF₂-O)ₙ-CF(CF₃)-COCl

A mixed solution prepared by dissolving 2.5 g (0.02 mol) of p-vinylphenol copolymer manufactured by Cosmo Oil Co., Ltd. (trade name: Resin M) in 100 g of methyl ethyl ketone dehydrated over anhydrous magnesium sulfate and adding 30 g of trifluorotrichloroethane dehydrated over anhydrous magnesium sulfate and 0.6 g of triethylamine (Et₃N) to the resulting solution was put in a three-necked flask charged with the reactant (I), followed by continuation of the reaction at 60°C for 4 hr. After the completion of the reaction, methyl ethyl ketone, trifluorotrichloroethane, and triethylamine were removed by vacuum distillation to prepare 20 g of a viscous reactant (II) having a light brown color represented by the following formula: 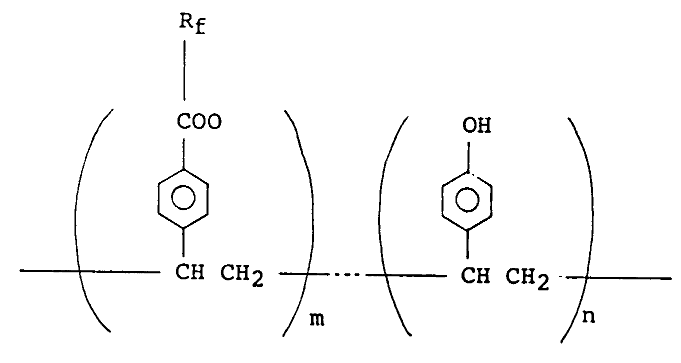
wherein R_{f} represents a perfluorinated polyoxyalkyl group and the ratio of m to n is 1 : 1. 0.04 g of the reactant (II) was dissolved in a mixed solution comprising 50 g of methyl ethyl ketone and 10 g of trifluorotrichloroethane to prepare a solution (I).

Then, a binder comprising 4.8 g of Resin M (a product of Cosmo Oil Co., Ltd.) and 8.8 g of a trifunctional epoxy resin manufactured by Dow Chemical (trade name: XD 9053) and an onium compound curing accelerator composed of triethylammonium tetraphenyl borate (a product of Hokko Chemical Industry Co., Ltd.; trade name, TEA-K) were dissolved in a mixed solution comprising 200 g of methyl ethyl ketone and 150 g of cyclohexanone, and 150 g of magnetic iron oxide (γ-Fe₂O₃) was added thereto, followed by kneading with a ball mill to disperse the magnetic iron oxide in the solution, thereby preparing a solution (II).

60 g of the solution (I) was added to the solution (II), followed by sufficient kneading with a ball mill. The resulting mixture was applied on an aluminum substrate of which the surface had previously been cleaned. The magnetic powder contained in the coating was oriented by a conventional method. Then, the coating was heat cured at 250°C to prepare a magnetic disk.

The sliding durability of the magnetic disk thus prepared was evaluated with a spherical sliding tester. Specifically, a load of 10 g was applied to a sapphire spherical sliding element (R30; radius of 30mm), and the disk was rotated under conditions of a peripheral speed of 10 m/s and an ambient temperature of 25°C to evaluate the sliding durability of the disk in terms of the total number of revolutions required for causing a damage to the outermost magnetic coating.

As a comparative example, a magnetic disk was prepared as follows. The solution [II] was kneaded in a ball mill for dispersion and applied on an aluminum substrate having a cleaned surface, and the magnetic powder was oriented, followed by curing at 250°C, thereby preparing a magnetic disk. Krytox 143AC, a fluorine lubricant, was simply applied on the magnetic disk for use as the comparative example.

As can be seen from Table 1 which will be described later, the total number of revolutions required for causing a damage to the magnetic coating of the magnetic disk of the present example was larger than that of the comparative example. Thus the magnetic disk of the present example was superior in the sliding durability.

### Example 2

A 500-ml three-necked flask equipped with a reflux condenser was charged with a mixed solution comprising 50 g of methyl ethyl ketone and 50 g of dimethylformamide and 4.5 g (0.02 mol) of a trifunctional epoxy resin manufactured by Dow Chemical (trade name: XD9053), followed by heat dissolution while stirring. Thereafter, a mixed solution comprising 22 g (0.02 mol) of a fluorine compound (a trial product of Nippon Mektron, Ltd.) dehydrated over anhydrous magnesium sulfate and represented by the following formula: 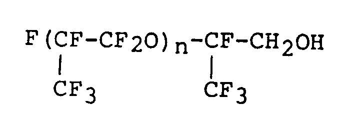
wherein n represents a value of 7 on the average, 0.3 g of sodium hydride (NaH), and 50 g of methyl ethyl ketone was gradually added dropwise to the three-necked flask, followed by continuation of the reaction at 80°C for 5 hr. After the completion of the reaction, the reaction mixture was repeatedly washed with water and purified by vacuum distillation, thereby preparing 20 g of a viscous reactant (III) having a light brown color and represented by the following formula: 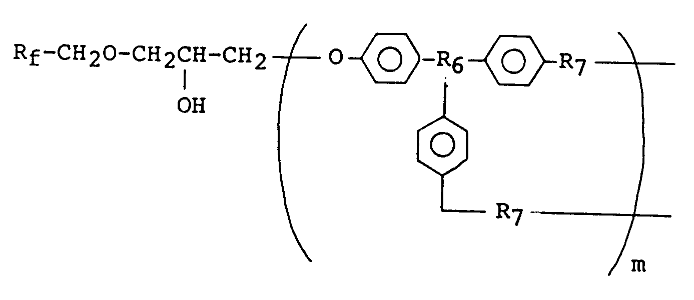
wherein R_{f} represents F(CF(CF₃)-CF₂-O-)ₙ-CF(CF₃)- wherein n represents a value of 7 on the average, R₆ =-C₃H₅-, R₇ 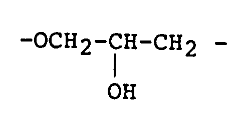
and m an integer of 1 or more.

0.08 g of the reactant (III) was dissolved in a mixed solution comprising 50 g of methyl ethyl ketone and 10 g of trifluorotrichloroethane to prepare a solution (III).

Then, the solution (II) was prepared in the same manner as that of Example 1.

60 g of the solution (III) was added to the solution (II), followed by sufficient kneading with a ball mill. The resulting mixture was applied on an aluminum substrate of which the surface had previously been cleaned. The magnetic powder contained in the coating was oriented by a conventional method. Then, the coating was heat cured at 250°C to prepare a magnetic disk.

The sliding durability of the magnetic disk thus prepared was evaluated with a spherical sliding tester in the same manner as that of Example 1.

As can be seen from Table 1, the total number of revolutions required for causing a damage to the magnetic coating of the magnetic disk of the present example was larger than that of the comparative example described in Example 1. Thus the magnetic disk of the present example was superior in the sliding durability.

**Table 1**

| Ex. No. | total number of revolutions required for causing damage to magnetic medium of magnetic disk |
|---|---|
| 1 | >240000 |
| 2 | >240000 |
| Comp. Ex. | 23000 |

### Example 3

A 500-ml three-necked flask equipped with a reflux condenser was charged with a mixed solution comprising 50 g of methyl ethyl ketone dehydrated over anhydrous magnesium sulfate and 50 g of dimethylformamide and then 40 g (0.02 mol) of an epoxy resin manufactured by Shell Chemicals (trade name: EP-1004), followed by dissolution at 80°C while stirring. Thereafter, a mixed solution comprising 26.4 g (0.02 mol) of a fluorine compound (a product of Nippon Mektron, Ltd.) dehydrated over anhydrous magnesium sulfate and represented by the following formula:

F(CF(CF₃)-CF₂-O-)ₙ-CF(CF₃)-CH₂-OH

wherein n represents a value of 7 on the average, 0.3 g of sodium hydride (NaH), 30 g of trichlorotrifluoroethane, and 50 g of methyl ethyl ketone was gradually added dropwise to the three-necked flask, followed by heating at 80°C for 4 hr while stirring. The reaction mixture was allowed to cool at room temperature, sufficiently washed with water and purified by vacuum distillation, thereby preparing a viscous reactant (IV) having a light brown color and represented by the following formula: 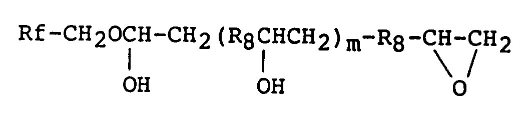
wherein R_{f} represents F(CF(CF₃)-CF₂-O-)ₙ-CF(CF₃)- , m an integer of 5 to 7, n a value of 7 on the average and R₈

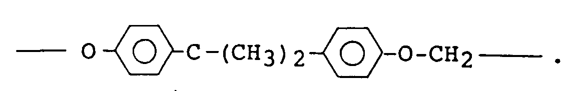

0.08g of the reactant (IV) was dissolved in a mixed solution comprising 50 g of methyl ethyl ketone and 10 g of trifluorotrichloroethane to prepare a solution (IV). Subsequently, 40 g (0.02 mol) of an epoxy resin composed of Epikote (EP1004), 8.8 g (0.02 mol) phenol resin composed of Hitanol 1501 (a product of Hitachi Chemical Co., Ltd), and 0.59 g of a curing accelerator composed of triethylammonium tetraphenyl borate (a product of Hokko Chemical Industry Co., Ltd.; trade name, TEA-K) were dissolved in a mixed solvent comprising 200 g of methyl ethyl ketone and 150 g of dimethylformamide to prepare a solution (V). The solution (V) was mixed with the solution (IV) to prepare a mixed solution (VI).

Thereafter, the surface of a 5-in. aluminum alloy disk was subjected to an alumite treatment. The treated disk was mounted on a vacuum evaporation device, where a cobalt-chromium alloy was evaporated by heating under a vacuum of 5 x 10⁻⁵ Torr, thereby forming a 0.2 µm-thick thin ferromagnetic layer comprising the cobalt-chromium alloy on the disk. The solution (VI) was applied on this disk, and the resulting coating was heat cured at 250°C to prepare a magnetic disk.

The sliding durability of the magnetic disk thus prepared was evaluated with a spherical sliding tester in the same manner as that of Example 1.

As a comparative example, a magnetic disk was prepared as follows. The surface of a 5-in. aluminum alloy disk was subjected to an alumite treatment. The treated disk was mounted on a vacuum evaporation device, where a cobalt-chromium alloy was evaporated by heating under a vacuum of 5 x 10⁻⁵ Torr, thereby forming a 0.2µm-thick thin ferromagnetic layer comprising the cobalt-chromium alloy on the disk. The solution (V) was applied on this disk, and the resulting coating was heat cured at 250°C to prepare a magnetic disk. Krytox 143AC, a fluorine lubricant, was simply applied on the disk for use as the comparative example.

As can be seen from Table 2 which will be described later, the total number of revolutions required for causing a damage to the protective coating of the magnetic disk of the present example was larger than that of the comparative example. Thus the magnetic disk of the present example was superior in the sliding durability.

### Example 4

A 200-ml three-necked flask equipped with a reflux condenser was charged with 50 g of acetone dehydrated over anhydrous magnesium sulfate, and 4.1 g (0.01 mol) of 2,2-bis(4(aminophenoxy)phenyl)propane was dissolved therein. Then, 25 g of triethylamine (Et₃N) was added to the three-necked flask, followed by stirring at 15°C. Thereafter, 22 g (0.01 mol) of the reactant (I) prepared in Example 1 was dissolved in a mixed solvent comprising 30 g of dehydrated acetone and 10 g of trifluorotrichloroethane. The resulting solution was gradually added dropwise to the three-necked flask, and the flask was heated at 20°C for 4 hr. After the completion of the reaction, the reaction mixture was sufficiently washed with water and then purified by vacuum distillation, thereby preparing a viscous reactant (V) having a light brown color and represented by the following formula: 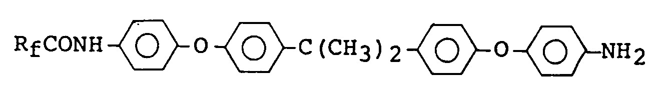
wherein R_{f} represents F(CF(CF₃)-CF₂-O-)ₘ-CF(CF₃)-, m a value of 7 on the average. 0.08 g of the reactant (V) was dissolved in a mixed solution comprising 50 g of acetone and 10 g of trifluorotrichloroethane to prepare a solution (VII).

Subsequently, 50 g of Stoutes (trade name and a product of Hitachi Chemical Co., Ltd.) was dissolved in acetone, and the solution (VII) was added thereto, thereby preparing a solution (VIII).

Then, the surface of 5-in. aluminum alloy disk was subjected to an alumite treatment. The treated disk was mounted on a vacuum evaporation device, where a cobalt-chromium alloy was evaporated by heating under a vacuum of 5 x 10⁻⁵ Torr, thereby forming a 0.2 µm-thick thin ferromagnetic layer comprising the cobalt-chromium alloy on the disk. The solution (VIII) was applied on the disk, and the resulting coating was heat cured at 120°C to prepare a magnetic disk.

The sliding durability of the magnetic disk thus prepared was evaluated with a spherical sliding tester in the same manner as that of Example 1.

As can be seen from Table 2, the total number of revolutions required for causing a damage to the magnetic coating of the magnetic disk of the present embodiment was larger than that of the comparative example described in Example 3. Thus the magnetic disk of the present embodiment was superior in the durability.

**Table 2**

| Ex. No. | total number of revolutions required for causing damage to magnetic medium of magnetic disk |
|---|---|
| 3 | >240000 |
| 4 | >240000 |
| Comp. Ex. | 57000 |

As described above, the magnetic recording medium of the present invention exhibits an excellent high sliding durability.

## Claims

1. A magnetic recording medium comprising a substrate and an outer layer overlying said substrate, said outer layer containing an organic binder and a lubricant comprising a fluorine compound, characterised in that said compound has at its terminal the same molecular skeleton as that of at least one component of said organic binder.

2. A magnetic recording medium according to claim 1, wherein said fluorine compound is a compound represented by the following general formula:
R_{f}-X₁-X₂
wherein R_{f} represents a perfluorinated polyoxyalkyl group, X₁ a direct bond or an -O-, -CH₂O-, -COO- or -CONH- group and X₂ the same molecular skeleton as that of at least one component of said organic binder.

3. A magnetic recording medium according to claim 2, wherein said organic binder contains in its molecular skeleton at least one group selected from among a group represented by the following general formula: 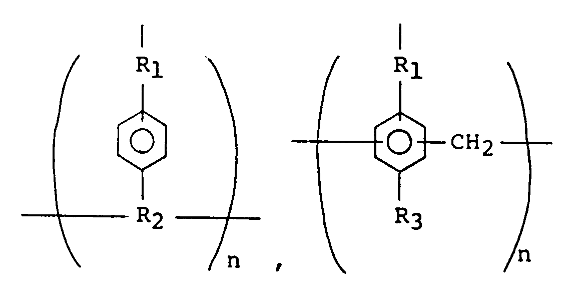 or copolymer group thereof,
wherein R₁ represents a direct bond or a 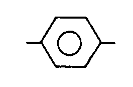 or -CH₂-CH(OH)CH₂ - group, R₂ a = CH-CH₂- or = CH-C₂H₄- group, R₃ a -CₘH₂ₘ₊₁ (wherein m represents an integer of to 18) or -CH₂OH group, and n an integer of 1 or more,
a group represented by the following general formula: 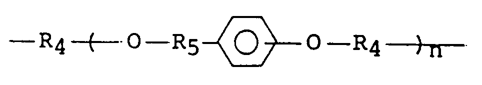 wherein R₄ represents a -CH₂-CH(OH)CH₂- group, R₅ a direct bond or a 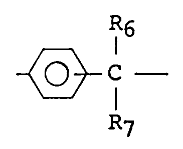 group (wherein R₆ and R₇ which may be the same or different are each -H, -CH₃, -C₂H₅, -C₃H₇, -CF₃, 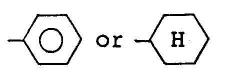 group) and n an integer of 1 or more,
a group represented by the following general formula: 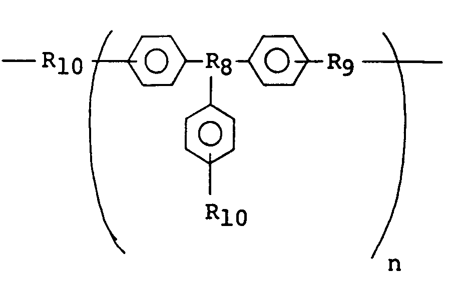 wherein R₈ represents a = CH-, = C₂H₃- or = C₃H₅-group,R₉ an -OCH₂-CH(OH)CH₂- group, R₁₀ an -OCH₂-CH(OH)CH₂- or 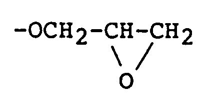 group and n an integer of 1 or more, and
a group of the following general formula: 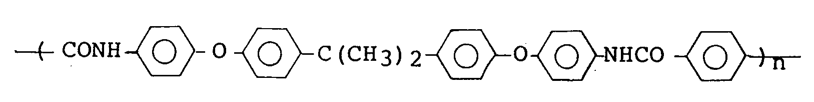 wherein n represents an integer of 1 or more.

4. A magnetic recording medium according to claim 2 or 3 wherein said perfluorinated polyoxyalkyl group is perfluoropolypropyleneoxide represented by the following formula:
F(CF(CF₃)-CF₂-O-)ₙCF(CF₃)-
wherein n represents a value of from 7 to 14 on the average.

5. A magnetic recording medium according to claim 3 wherein R₁ is a direct bond and R₂ is =CH-CH₂-.

6. A magnetic recording medium according to any preceding claim wherein said organic binder contains at least one organic compound selected from the group consisting of polyester, polyamide, polyimide, polyurethane, polyacrylic, polyetheramide, polyvinyl butyral, phenolic and epoxy compounds.

7. A magnetic recording medium according to claim 5 wherein said fluorine compound is represented by the following formula: 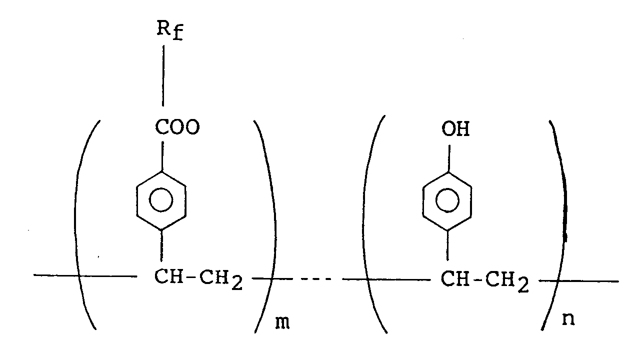 wherein R_{f} represent a perfluorinated polyoxyakyl group and the ratio of m to n is 1:1.

8. A magnetic recording medium according to claim 3 wherein said fluorine compound is represented by the following formula: 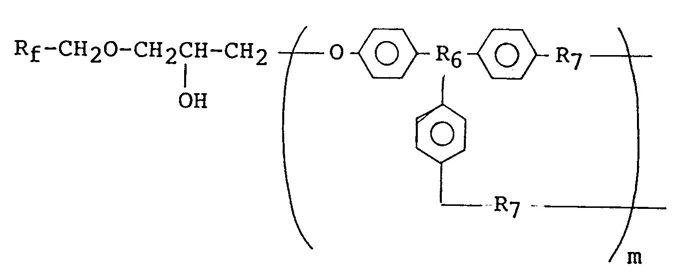 wherein R_{f} represents F(CF(CF₃)-CF₂-O-)ₙ-CF(CF₃)- wherein n represents a value of 7 on the average, R₆ =C₃H₅-, 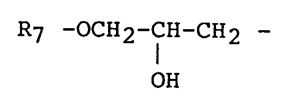 and m an integer of 1 or more.

9. A magnetic recording medium according to claim 3 wherein said fluorine compound is represented by the following formula: 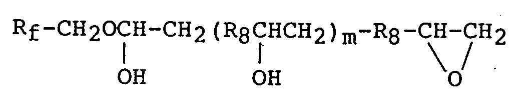 wherein R_{f} represents F(CF(CF₃)-CF₂-O-)ₙ-CF(CF₃)- , wherein n represent a value of 7 on the average, m an integer of 5 to 7 and

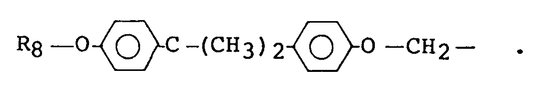

10. A magnetic recording medium according to claim 3 wherein said fluorine compound is represented by the following formula: 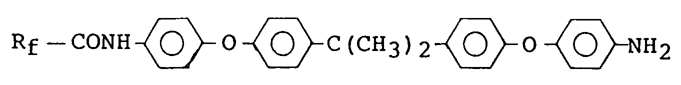 wherein R_{f} represents F(CF(CF₃)-CF₂-O-)ₘ-CF(CF₃)-, m a value of 7 on the average.

11. A method for producing a magnetic recording medium comprising the steps of:
preparing a solution containing an organic binder and a lubricant, said organic binder containing in its molecular skeleton at least one group selected from among a group represented by the following general formula: 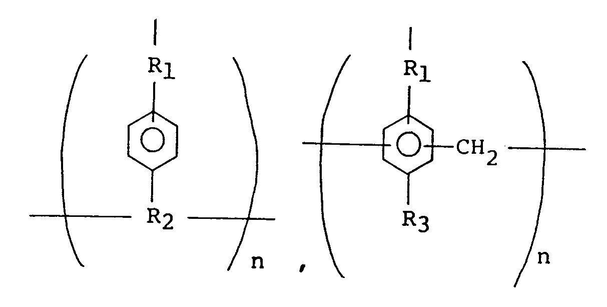 or copolymer group thereof,
wherein R₁ represents a direct bond or a 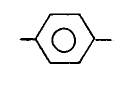 or -CH₂-CH(OH)CH₂- group, R₂ a =CH-CH₂- or =CH-C₂H₄- group, R₃ a -CₘH₂ₘ+₁ (wherein m is an integer of 0 to 18) or -CH₂OH group and n an integer of 1 or more,
a group represented by the following gereral formula: 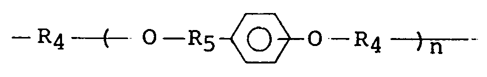 wherein R₄ represents a -CH₂-CH(OH)CH₂- group, R₅ a direct bond or a 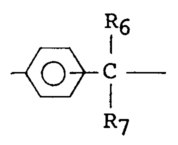 group (wherein R₆ and R₇ which may be the same or different are each -H, -CH₃, -C₂H₅, -C₃H₇, -CF₃, 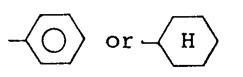 group) and n an integer of 1 or more,
a group represented by the following general formula: 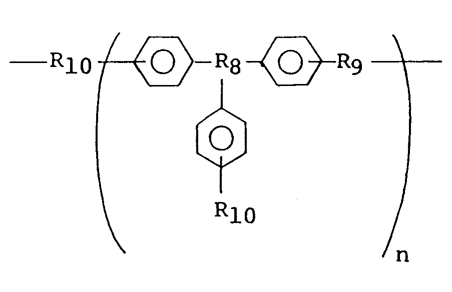 wherein R₈ represents a = CH-, = C₂H₃- or = C₃H₅- group, R₉ an -OCH₂-CH(OH)CH₂- group, R₁₀ an -OCH₂-CH(OH)CH₂- or 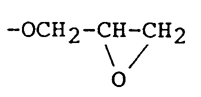 group and n an integer of 1 or more, and
a group of the following general formula: 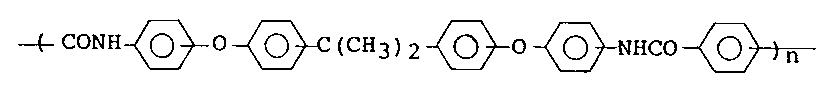 wherein n represents an integer of 1 or more,
and said luburicant is a compound represented by the following general formula:
R_{f}-X₁-X₂
wherein R_{f} represents a perfluorinated polyoxyalkyl group, X₁ a direct bond or an -O-, -CH₂O-, -COO- or -CONH- group and X₂ the same molecular skeleton as that of at least one component of said organic binder;
applying the prepared solution to a substrate for a magnetic material; and
heat-curing the applied solution whereby an outermost layer for the magnetic recording medium is constituted.

## Patentansprüche

1. Magnetisches Aufzeichnungsmedium, das ein Substrat und eine auf diesem Substrat angeordnete Außenschicht umfaßt, wobei die Außenschicht ein organisches Bindemittel und ein eine Fluorverbindung enthaltendes Gleitmittel enthält, dadurch gekennzeichnet, daß diese Verbindung in Endstellung das gleiche molekulare Gerüst aufweist, wie mindestens eine Komponente des organischen Bindemittels.

2. Magnetisches Aufzeichnungsmedium gemäß Anspruch 1, wobei diese Fluorverbindung eine durch die nachstehende allgemeine Formel
R_{f}-X₁-X₂
dargestellte Verbindung ist, worin R_{f} eine perfluorierte Polyoxyalkylgruppe, X₁ eine direkte Bindung oder eine Gruppe -O-, -CH₂O-, -COO- oder -CONH- ist und X₂ das gleiche molekulare Gerüst darstellt, wie das mindestens einer Komponente des organischen Bindemittels.

3. Magnetisches Aufzeichnungsmedium gemäß Anspruch 2, wobei das organische Bindemittel in seinem molekularen Gerüst mindestens eine Gruppe enthält, die ausgewählt ist unter:
einer durch die nachstehenden allgemeinen Formeln dargestellten Gruppe: 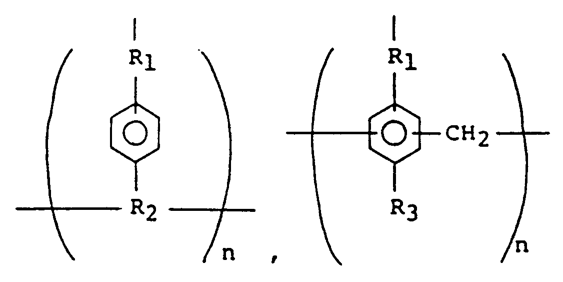 oder einer Copolymergruppe davon,
worin R₁ eine direkte Bindung oder eine 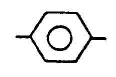 oder -CH₂-CH(OH)CH₂-Gruppe bedeutet, R₂ eine =CH-CH₂- oder =CH-C₂H₄-Gruppe bedeutet, R₃ eine -CₘH₂ₘ₊₁- (worin m eine ganze Zahl bis 18 darstellt) oder -CH₂OH-Gruppe bedeutet und n eine ganze Zahl von 1 oder mehr ist,
einer durch die folgende allgemeinen Formel 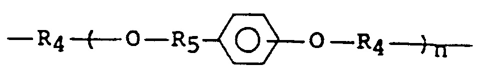 dargestellten Gruppe, worin R₄ eine -CH₂-CH(OH)CH₂-Gruppe bedeutet, R₅ eine direkte Bindung oder eine 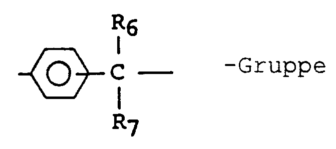 bedeutet (worin R₆ und R₇ gleich oder verschieden sein können und jeweils für -H, -CH₃, -C₂H₅, C₃H₇, -CF₃, die 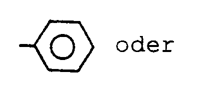 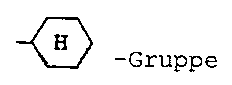 stehen) und n eine ganze Zahl von 1 oder mehr ist,
einer durch die folgende allgemeine Formel dargestellten Gruppe 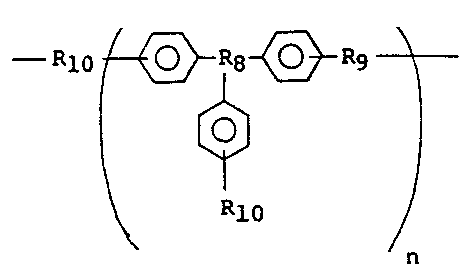 worin R₈ eine =CH-, =C₂H₃- oder =C₃H₅-Gruppe bedeutet, R₉ eine -OCH₂-CH(OH)CH₂-Gruppe, R₁₀ eine -OCH₂-CH(OH)CH₂- oder 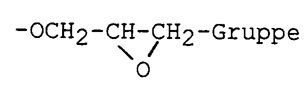 bedeuten und n eine ganze Zahl von 1 oder mehr ist, und
einer Gruppe der folgenden allgemeinen Formel 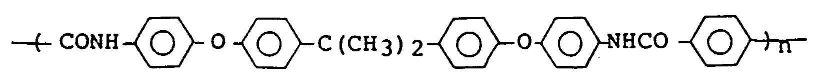 worin n eine ganze Zahl von 1 oder mehr bedeutet.

4. Magnetisches Aufzeichnungsmedium gemäß Anspruch 2 oder 3, wobei die perfluorierte Polyoxyalkylgruppe eine Perfluorpolypropylenoxidgruppe ist, die durch die folgende Formel dargestellt ist
F(CF(CF₃)-CF₂-O-)ₙCF(CF₃)-
worin n einen Durchschnittswert von 7 bis 14 hat.

5. Magnetisches Aufzeichnungsmedium gemäß Anspruch 3, wobei R₁ eine direkte Bindung ist und R₂ für =CH-CH₂ steht.

6. Magnetisches Aufzeichnungsmedium gemäß einem der vorhergehenden Patentansprüche, wobei das organische Bindemittel mindestens eine organische Verbindung enthält, die aus der aus Polyester, Polyamid, Polyimid, Polyurethan, Polyacrylat, Polyetheramid, Polyvinylbutyral, Phenolverbindungen und Epoxyverbindungen bestehenden Gruppe ausgewählt ist.

7. Magnetisches Aufzeichnungsmedium gemäß Anspruch 5, wobei die Fluorverbindung durch die folgende Formel dargestellt ist 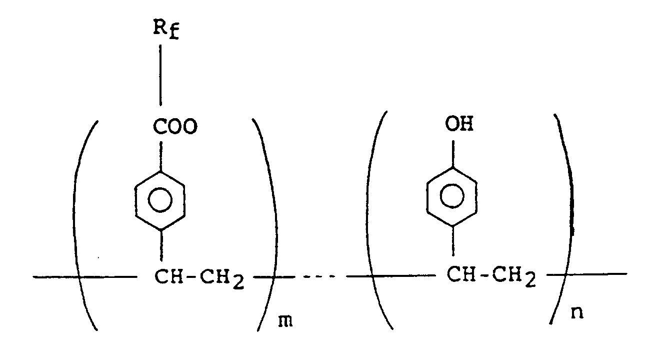 worin R_{f} eine perfluorierte Polyalkylgruppe bedeutet und das Verhältnis von m zu n 1:1 ist.

8. Magnetisches Aufzeichnungsmedium gemäß Anspruch 3, wobei die Fluorverbindung durch die folgende Formel dargestellt ist 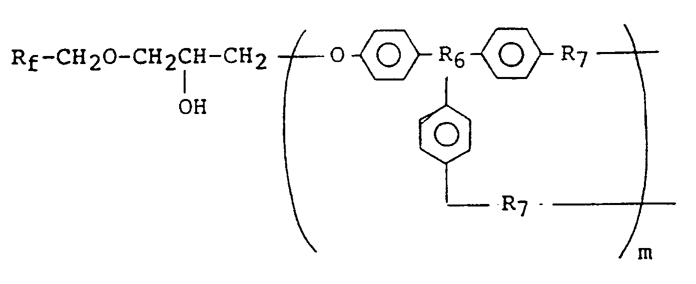 worin R_{f} F(CF(CF₃)-CF₂-O-)ₙ-CF(CF₃)- darstellt, worin n in einem Durchschnittswert von 7, R₆ =C₃H₅-, 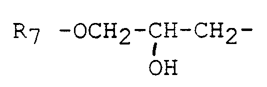 und m eine ganze Zahl von 1 oder mehr bedeuten.

9. Magnetisches Aufzeichnungsmedium gemäß Anspruch 3, wobei die Fluorverbindung durch die folgende Formel dargestellt ist 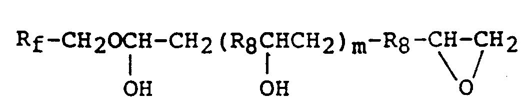 worin R_{f} F(CF(CF₃)-CF₂-O-)ₙ-CF(CF₃)- darstellt, worin n einen Durchschnittswert von 7 hat, m eine ganze Zahl von 5 bis 7 bedeutet und R₈ für 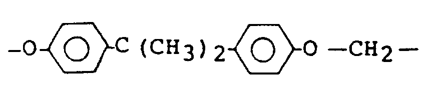 steht.

10. Magnetisches Aufzeichnungsmedium gemäß Anspruch 3, wobei die Fluorverbindung durch die folgende Formel dargestellt ist 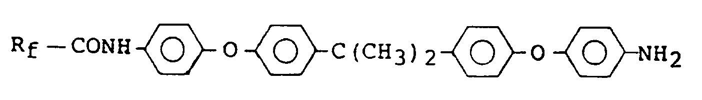 worin R_{f} für F(CF(CF₃)-CF₂-O-)ₘ-CF(CF₃)- steht und m einen Durchschnittswert von 7 hat.

11. Verfahren zur Herstellung eines magnetischen Aufzeichnungsmediums, das folgende Schritte umfaßt:
Herstellen einer ein organisches Bindemittel und ein Gleitmittel enthaltenden Lösung, wobei das organische Bindemittel in seinem molekularen Skelett mindestens eine Gruppe enthält, die ausgewählt ist aus einer durch die nachstehenden allgemeinen Formeln dargestellten Gruppe: 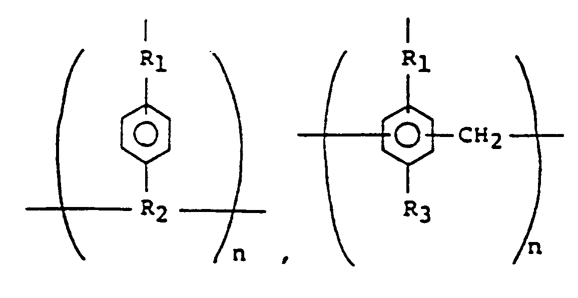 oder einer Copolymergruppe davon,
worin R₁ eine direkte Bindung oder eine 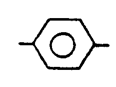 oder -CH₂-CH(OH)CH₂-Gruppe bedeutet, R₂ eine =CH-CH₂- oder =CH-C₂H₄-Gruppe bedeutet, R₃ eine -CₘH₂ₘ₊₁- (worin m eine ganze Zahl bis 18 darstellt) oder -CH₂OH-Gruppe bedeutet und n eine ganze Zahl von 1 oder mehr ist,
einer durch die folgende allgemeinen Formel 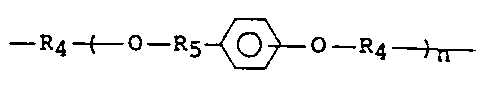 dargestellten Gruppe, worin R₄ eine -CH₂-CH(OH)CH₂-Gruppe bedeutet, R₅ eine direkte Bindung oder eine 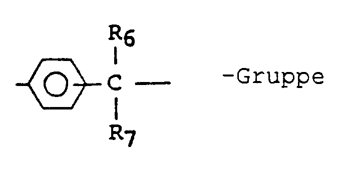 bedeutet (worin R₆ und R₇ gleich oder verschieden sein können und jeweils für -H, -CH₃, -C₂H₅, C₃H₇, -CF₃, die 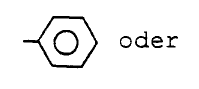 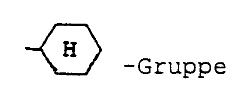 stehen) und n eine ganze Zahl von 1 oder mehr ist,
einer durch die folgende allgemeine Formel dargestellten Gruppe 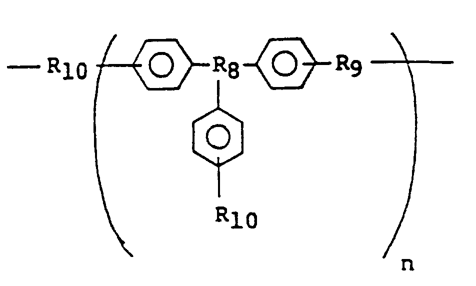 worin R₈ eine =CH-, =C₂H₃- oder =C₃H₅-Gruppe bedeutet, R₉ eine -OCH₂-CH(OH)CH₂-Gruppe, R₁₀ eine -OCH₂-CH(OH)CH₂- oder 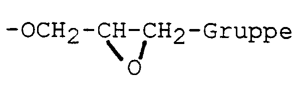 bedeuten und n eine ganze Zahl von 1 oder mehr ist, und
einer Gruppe der folgenden allgemeinen Formel 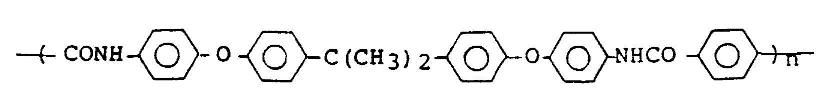 worin n eine ganze Zahl von 1 oder mehr bedeutet,
und wobei das Gleitmittel eine eine durch die nachstehende allgemeine Formel
R_{f}-X₁-X₂
dargestellte Verbindung ist, worin R_{f} eine perfluorierte Polyoxyalkylgruppe, X₁ eine direkte Bindung oder eine Gruppe -O-, -CH₂O-, -COO- oder -CONH- ist und X₂ das gleiche molekulare Gerüst darstellt, wie das mindestens einer Komponente des organischen Bindemittels,
Auftragen der hergestellten Lösung auf ein Substrat für ein magnetisches Material und
thermisches Härten der aufgetragenen Lösung, wodurch eine Außenschicht für ein magnetisches Aufzeichnungsmaterial gebildet wird.

## Revendications

1. Support d'enregistrement magnétique comprenant un substrat et une couche externe recouvrant ledit substrat, ladite couche externe contenant un liant organique et un lubrifiant comprenant un composé de fluor, caractérisé en ce que ledit composé a, à son extrémité, le même squelette moléculaire que celui d'au moins un composant dudit liant organique.

2. Support d'enregistrement magnétique selon la revendication 1 où ledit composé de fluor est un composé représenté par la formule générale suivante :
R_{f}-X₁-X₂
où R_{f} représente un groupe polyoxyalkyle perfluoré, X₁, une liaison directe ou bien un groupe -O-, CH₂O-, -COO- ou -CONH- et X₂, le même squelette moléculaire que celui d'au moins un composant dudit liant organique.

3. Support d'enregistrement magnétique selon la revendication 2, où ledit liant organique contient, dans son squelette moléculaire, au moins un groupe choisi parmi un groupe représenté par la formule générale suivante : 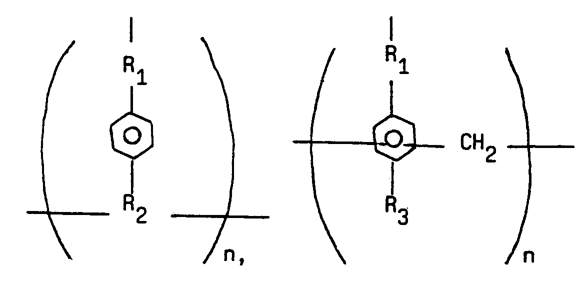 ou son groupe copolymère,
où R₁ représente une liaison directe ou un groupe ou -CH₂-CH(OH)CH₂, R₂ un groupe = CH-CH₂- ou = CH-C₂H₄, R₃ un groupe -CₘH₂ₘ₊₁ (où m représente un nombre entier de 0 à 18) ou -CH₂OH, et n est un nombre entier de 1 ou plus,
un groupe représenté par la formule générale suivante : 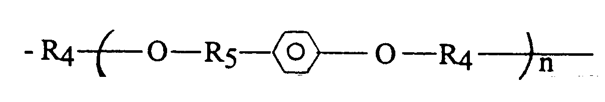 où R₄ représente un groupe -CH₂-CH(OH)CH₂, R₅ une liaison directe ou un groupe 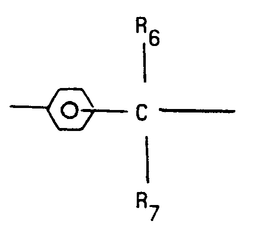 (où chacun de R₆ et R₇, qui peuvent être identiques où différents est un groupe -H, -CH₃, -C₂H₅, C₃H₇, 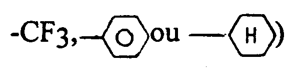 et n est un nombre entier de 1 ou plus,
un groupe représenté par la formule générale suivante : 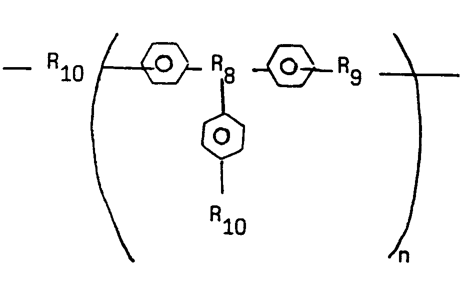 où R₈ représente un groupe = CH-, = C₂H₃- ou = C₃H₅-, R₉ un groupe -OCH₂-CH(OH₆CH₂, R₁₀ un groupe -OCH₂-CH(OH)CH₂- ou 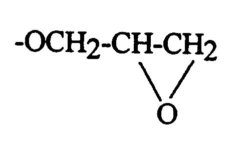 et n est un nombre entier de 1 ou plus, et
un groupe de la formule générale suivante : 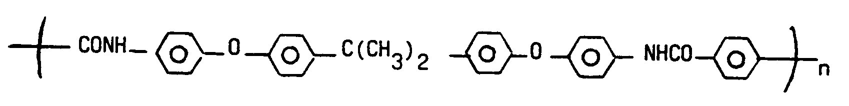 où n représente un nombre entier de 1 ou plus.

4. Support d'enregistrement magnétique selon la revendication 2 ou 3, où ledit groupe polyoxyalkyle pefluoré est l'oxyde de perfluoropolypropylène représenté par la formule suivante :
F(CF(CF₃)-CF₂-O-)ₙCF(CF₃)-
où n représente une valeur de 7 à 14 en moyenne.

5. Support d'enregistrement magnétique selon la revendication 3 où R₁ est une liaison directe et R₂est = CH-CH₂-.

6. Support d'enregistrement magnétique selon l'une quelconque des revendications précédentes où ledit liant organique contient au moins un composé organique choisi dans le groupe consistant en un polyester, un polyamide, un polyimide, un polyuréthanne, un polyacrylique, un polyétheramide, du polyvinyl butyral, des composés phénoliques et époxy.

7. Support d'enregistrement magnétique selon la revendication 5, où ledit composé de fluor est représenté par la formule suivante : 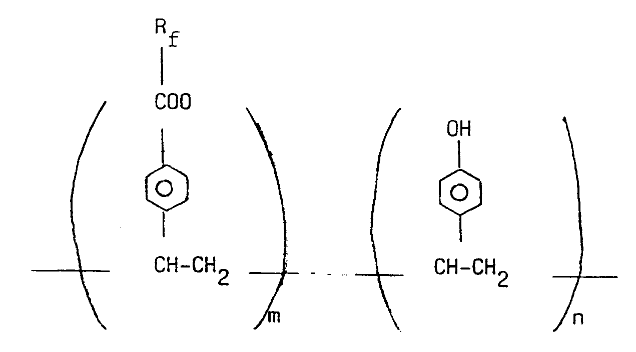 où R_{f} représente un groupe polyoxyakyle perfluoré et le rapport de m à n est 1:1.

8. Support d'enregistrement magnétique selon la revendication 3, où ledit composé de fluor est représenté par la formule suivante : 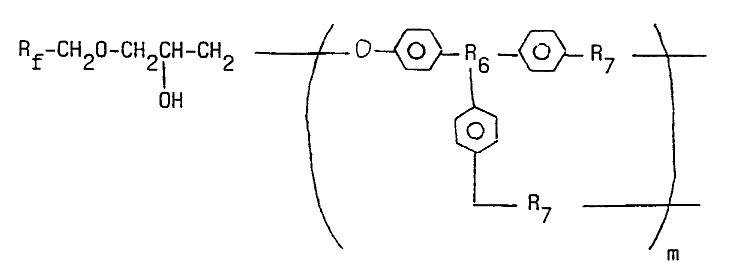 où R_{f} représente F(CF(CF₃)-CF₂-O-)ₙ-CF(CF₃)- où n représente une valeur de 7 en moyenne, R₆ = C₃H₅-, 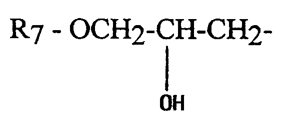 et m est un nombre entier de 1 ou plus.

9. Support d'enregistrement magnétique selon la revendication 3 où ledit composé de fluor est représenté par la formule suivante : 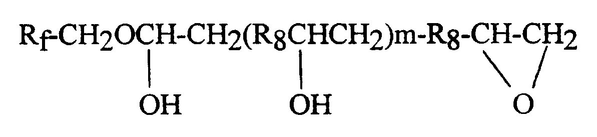 où R_{f} représente F(CF(CF₃)-CF₂-O-)ₙ-CF(CF₃)-,
où n représente une valeur de 7 en moyenne, m un nombre entier de 5 à 7 et R₈ est

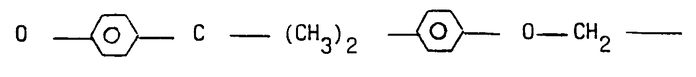

10. Support d'enregistrement magnétique selon la revendication 3, où ledit composé de fluor est représenté par la formule suivante : 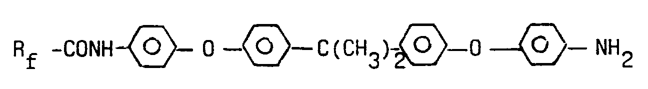 où R_{f} représente F(CF(CF₃)-CF₂-O-)ₘ-CF(CF₃)-, m a une valeur de 7 en moyenne.

11. Méthode de production d'un support d'enregistrement magnétique comprenant les étapes de :
préparer une solution contenant un liant organique et un lubrifiant, ledit liant organique contenant dans son squelette moléculaire au moins un groupe choisi parmi un groupe représenté par la formule générale suivante : 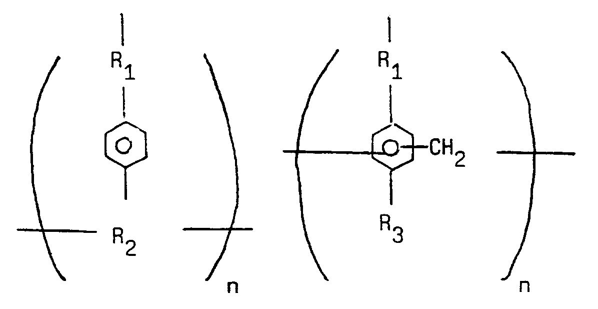 où son groupe copolymère,
où R₁ représente une liaison directe où un groupe 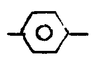 ou -CH₂-CH(OH)CH₂-, et R₂ un groupe =CH-CH₂- ou = CH-C₂H₄-, R₃ un groupe -CₘH2ₘ₊₁ (où m est un nombre entier de 0 à 18) ou -CH₂OH et n un nombre entier de 1 ou plus,
un groupe représenté par la formule générale suivante : 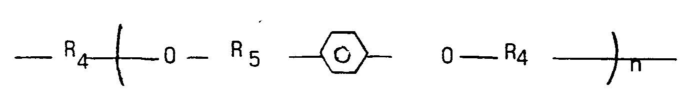 où R₄ représente un groupe -CH₂-CH(OH)CH₂-, R₅ une liaison directe ou un groupe 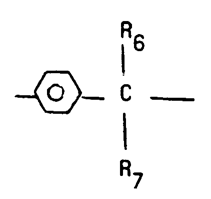 (où chacun de R₆ et R₇ qui peuvent être identiques ou différents, est un groupe -H, -CH₃, -C₂H₅, -C₃H₇, -CF₃, 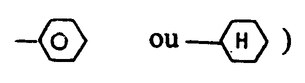 et n est un nombre entier de 1 ou plus,
un groupe représenté par la formule générale suivant : 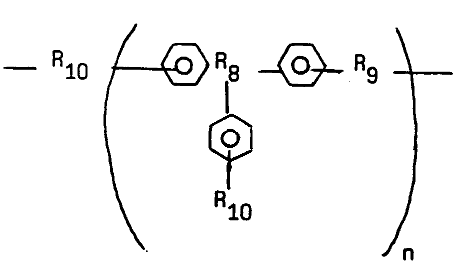 où R₈ représente un groupe = CH-, = C₂H₃- ou = C₃H₅-, R₉ un groupe -OCH₂-CH(OH)CH₂-, R₁₀ un groupe -OCH₂-CH(OH)CH₂- ou un groupe 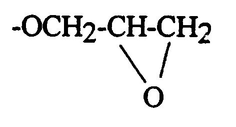 et n un nombre entier de 1 ou plus, et un groupe de la formule générale suivante : 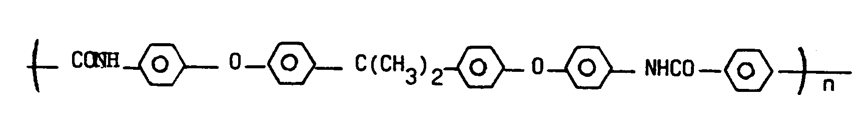 où n représente un nombre entier de 1 ou plus,
et ledit lubrifiant est un composé représenté par la formule générale suivante :
R_{f}-X₁-X₂
où R_{f} représente un groupe polyoxyalkyle perfluoré, X₁ une liaison directe ou bien un groupe -O-, CH₂O-, -COO- ou -CONH- et X₂ le même squelette moléculaire que celui d'au moins un composant dudit liant organique.
appliquer la solution préparée à un substrat d'un matériau magnétique et durcir à la chaleur la solution appliquée pour ainsi constituer une couche externe du support d'enregistrement magnétique.
